# FASCICULE DE BREVET EUROPEEN

(11) **EP 2 622 890 B1**
(45) Date de publication et mention de la délivrance du brevet: **27.07.2016**
(21) Numéro de dépôt: 10810771.5
(22) Date de dépôt: 29.09.2010
(51) Int. Cl.: H04W 12/06, H04W 36/12

(54) **PROCÉDÉ D'ATTACHEMENT ET D'AUTHENTIFICATION D'UN TERMINAL UTILISATEUR AUPRÈS D'UN RÉSEAU VISITE.**
VERFAHREN ZUR ANBINDUNG UND AUTHENTIFIZIERUNG EINES BENUTZERENDGERÄTS IN EINEM BESUCHTEN NETZ.
METHOD FOR ATTACHING AND AUTHENTICATING A USER TERMINAL IN A VISITED NETWORK.

(43) Date de publication de la demande: 07.08.2013
(73) Titulaire: Airbus DS SAS, 78990 Elancourt (FR)
(72) Inventeur: PISON, Laurent, F-78760 Jouars Ponchartrain (FR)
(74) Mandataire: Lebkiri, Alexandre
(86) Numéro de dépôt international: PCT/FR2010/052058
(87) Numéro de publication internationale: WO 2012/042121

(56) Documents cités:
- NPSTC 700 MHz: "700 MHz LTE Network Interoperability", National Public Safety Telecommunications Council , 19 août 2009 (2009-08-19), pages 1-33, XP000002658574, Extrait de l'Internet: URL:http://www.npstc.org/download.jsp?tabl eId=37&column=217&id=491&file=LTE%20System %20Interoperability%20v7.pdf [extrait le 2011-09-08]
- Pandu Sinatriyo: "Network Sharing Scenarios and Challenges", Nokia Siemens Networks , 11 février 2010 (2010-02-11), XP000002658575, Extrait de l'Internet: URL:http://denysetia.files.wordpress.com/2 010/09/11-feb-2010-mastel-network-sharing. pdf [extrait le 2011-09-08]

## Description

La présente invention se situe dans le domaine des télécommunications et concerne un procédé d'attachement et d'authentification d'un terminal utilisateur auprès d'un réseau visité. Plus précisément le procédé permet l'itinérance (« roaming » en anglais) d'un terminal utilisateur entre un réseau de radiocommunications de type hôte (« HOME » en anglais) et un réseau de radiocommunications de type visité (« VISITED » en anglais). L'invention trouve une application intéressante dans le cas des réseaux professionnels de radiocommunications PMR (pour « Professional Mobile Radiocommunications » en anglais), et plus particulièrement dans le cadre de l'utilisation des technologies de télécommunications à large bande.

A titre d'exemple, un procédé d'attachement et d'authentification d'un terminal utilisateur est décrit par le document suivant: NPSTC 700 MHz: « 700 MHz LTE Network Interoperability » National Public Safety Télécommunications Council.

Par ailleurs, de façon connue, chaque utilisateur d'un réseau public mobile de télécommunications PLMN (pour « Public Land Mobile Network ») possède actuellement un module d'identification du type carte SIM (« Module d'identité du souscripteur » ou « Subscriber Identity Module » en anglais) dans lequel est stocké un identifiant unique et permanent de l'utilisateur IMSI (pour « International Mobile Subscriber Identity » en anglais) comprenant un identifiant d'opérateur reconnu internationalement. Cet identifiant d'opérateur comporte un PLMNid ou operateur id (MCC+MNC unique) définissant de manière unique son réseau hôte (« HOME » en anglais). On entend par réseau hôte, le réseau d'origine auquel l'utilisateur du terminal est abonné.

De manière générale, un réseau peut couvrir plusieurs zones géographiques, comporter plusieurs organisations ou encore plusieurs opérateurs.

La syntaxe de l'identifiant PLMNid est décrite dans la norme ITU-T E.212 émise par l'ITU (pour « International Télécommunication Union » en anglais). Ce réseau public peut être un réseau cellulaire de deuxième génération du type GSM (pour « Global System for Mobile communications » en anglais) ou GPRS (pour « Global Packet Radio Service » en anglais), de troisième génération tels que les réseaux UMTS (pour « Universal Mobile Télécommunications System » en anglais), ou de quatrième génération de type LTE (pour « Long Term Evolution » en anglais) définis par la norme 3GPP (pour « 3rd Génération Partnership Project » en anglais).

L'identifiant PLMNid est composé de la façon suivante :
- un code MCC (« Mobile Country Code ») de 3 chiffres correspondant à l'indicatif du pays, et
- un code MNC (« Mobile Network Code ») de 2 ou 3 chiffres correspondant à l'indicatif de l'opérateur.

De manière générale, un réseau peut comporter plusieurs zones géographiques, plusieurs organisations ou encore plusieurs opérateurs.

Le code MCC et le code MNC sont alloués de manière statique (cf. l'ITU-T E 212 pour les réseaux de type 3GPP, l'ITU-T 218 pour les réseaux de type « trunk » (i.e. TETRA pour « Trans European Trunked Radio ») ou encore l'IEEE pour les réseaux de type WiMAX).

Les systèmes de radiocommunications professionnelles appelés systèmes PMR (pour « Professional Mobile Radiocommunications " en anglais) de type TETRA (pour « Trans European Trunked Radio » en anglais) ou TETRAPOL défini par le forum d'industriels TETRAPOL (http:/lwww.tetrapol.com) ou encore de type P25 défini par la « Télécommunications Industry Association (TIA) » pour l' « Association of Public-Safety Communications Officers (APCO)» sont des réseaux indépendants de communication mobile dédiés à l'usage des entreprises ou des administrations, notamment pour assurer la sécurité publique, la sécurité industrielle, ou pour intervenir dans les activités de transport. Les réseaux PMR sont largement utilisés par les services de sécurité publique (gendarmerie et police nationale par exemple) et des secours, et également par bien d'autres catégories d'utilisateurs (transports publics, aéroports,...). Ce sont des réseaux privés qui présentent un haut niveau de sécurité. Les réseaux PMR actuels, basés sur les technologies citées ci-dessus, sont des réseaux dits à bande étroite, caractérisés par une largeur de canal de l'ordre d'une dizaine de kilohertz (kHz).

L'évolution des réseaux de télécommunications et la montée du haut débit incitent les utilisateurs de systèmes PMR à demander des applications toujours plus évoluées, nécessitant une bande passante plus importante. Dès lors, il est important de pouvoir faire évoluer les systèmes PMR vers de plus hauts débits en large bande, par exemple en mettant en oeuvre une technologie à bande large (par exemple de type LTE "Long Term Evolution" en anglais) ou WiMAX (pour "Worldwide Interoperability for Microwave Access" en anglais)); de tels systèmes devront en conséquence répondre à un système d'identification défini selon la norme ITU-T E.212.

Il convient de noter que chaque réseau possède un identifiant de type PLMNid. En d'autres termes deux réseaux voisins possèdent chacun un identifiant PLMNid différent. Il s'ensuit qu'un identifiant IMSI incluant le PLMNid du réseau hôte de l'utilisateur doit être attribué à chaque utilisateur d'un réseau PMR.

Plus particulièrement, pour être identifiable, un utilisateur de réseau PMR doit usuellement posséder un identifiant permettant de lui attribuer d'une part, une zone géographique, comme par exemple un département pour la France ou un comté pour les Etats-Unis, et une catégorie d'utilisateur comme par exemple la police, les pompiers ou encore une organisation nationale ou internationale.

Par exemple, dans le cas des Etats-Unis, un réseau PMR doit être divisé en une pluralité de zones géographiques, chaque zone géographique désignant un comté parmi plus de 3000 comtés formant le territoire américain. En outre, au sein de chaque zone géographique (constituée par un comté pour les Etats-Unis) on considère par exemple trois catégories d'utilisateurs : la police, l'armée et les pompiers. En conséquence, dans une telle mise en oeuvre il faut un minimum de 9000 catégories d'identifiants permettant seulement de trier par comté et par catégorie d'utilisateurs.

Un utilisateur d'un réseau PMR possède alors un code d'identification de type hôte tel qu'un identifiant IMSI qui inclut le PLMNid du réseau hôte de l'utilisateur. En dehors de son réseau hôte, l'utilisateur est toujours considéré comme visiteur. Lorsqu'il est considéré comme visiteur, il sera soit refusé soit accepté par le réseau qui est visité (« VISITED » en anglais). Il est accepté si un accord d'itinérance (« roaming » en anglais) existe entre le réseau visité et son réseau hôte. Dans le cas où un accord d'itinérance existe entre ces derniers, le terminal de l'utilisateur demande à s'attacher au réseau visité identifié par un identifiant PLMNid différent de celui du réseau hôte du terminal de l'utilisateur.

Une telle solution pose cependant certaines difficultés. En effet, la quantité importante de terminaux PMR couplée à la multiplicité d'accords d'itinérance nécessite un nombre très élevé d'identifiants de réseau de type PLMNID.

Dans ce contexte, l'invention vise à proposer un procédé d'attachement et d'authentification d'un terminal utilisateur passant d'un réseau de radiocommunications de type hôte à un réseau de radiocommunications de type visité permettant de réduire le nombre d'identifiants de réseaux nécessaires (par exemple de type PLMNid selon la norme ITU-T E.212). L'invention est définie dans les revendications 1, 11 et 12. Des modes de réalisation particuliers sont définis dans les revendications dépendantes.

A cette fin, l'invention porte sur un procédé d'attachement et d'authentification d'un terminal utilisateur d'un réseau de radiocommunications de type hôte à un réseau de radiocommunications de type visité, ledit réseau hôte comportant notamment des moyens de rattachement hôtes à un réseau de paquets et ledit réseau visité comportant :
- au moins une station de base visitée apte à assurer la transmission et la réception radio avec des terminaux utilisateurs se trouvant dans au moins une cellule visitée rattachée à ladite station de base visitée;
- des moyens d'authentification et de contrôle visités des terminaux utilisateurs aptes à authentifier les terminaux utilisateurs attachés au dit réseau; et
- au moins une passerelle de distribution visitée assurant la réception et l'émission radio avec ladite au moins une station de base visitée;
ledit procédé étant caractérisé en ce que, le réseau hôte et le réseau visité possèdent un code d'identificateur réseau commun au moins aux deux réseaux, en ce que chaque terminal utilisateur appartenant au réseau hôte possède un premier code d'identification d'utilisateur comportant, d'une part, le code identificateur réseau commun au moins au réseau hôte et au réseau visité; et d'autre part un deuxième code d'identification d'utilisateur du réseau hôte,
et en ce que lorsque le terminal utilisateur appartenant au réseau hôte se trouve dans une cellule visitée de la station de base visitée, ledit procédé comporte les étapes suivantes :
- accéder au réseau visité depuis le terminal utilisateur du réseau hôte, au moyen du code identificateur réseau commun ;
- authentifier, dans le réseau visité le terminal utilisateur au moyen du deuxième code d'identification d'utilisateur du réseau hôte auprès d'au moins une base de données comportant des informations relatives aux droits d'accès d'utilisateurs des terminaux utilisateurs au réseau visité ; et
- établir un canal d'accès dédié au terminal utilisateur du réseau hôte entre la passerelle de distribution visitée et les moyens de rattachement hôtes.

Grâce à l'invention, un terminal utilisateur communique toujours avec un réseau de paquets d'un réseau de radiocommunications auquel il appartient (son réseau hôte ou « HOME » selon la terminologie anglaise) et ce même s'il s'attache à un autre réseau de radiocommunications dit réseau visité (« VISITED » selon la terminologie anglaise). Ainsi, un unique code identificateur réseau commun de type PLMNid est utilisé pour une pluralité de réseaux, cet unique code d'identification de type PLMNid permettant à un terminal utilisateur de s'attacher à n'importe quel réseau de radiocommunications sous réserve que le premier code d'identification d'utilisateur possède le code identificateur réseau commun pour une pluralité de réseaux identique au code d'identification de type PLMNid du réseau auquel il souhaite s'attacher.

Outre le fait de n'utiliser qu'un seul PLMNid pour plusieurs réseaux, le procédé de l'invention offre les mêmes avantages que ceux fournis par deux réseaux possédant chacun son propre PLMNid. A titre d'exemple, le procédé de l'invention permet la réutilisation de l'authentification en mode roaming, la gestion des droits spécifiques au réseau visité en mode roaming, la facturation entre réseaux ainsi que l'étanchéité et la sécurité des réseaux les uns par rapport aux autres. En d'autres termes, les avantages du mode roaming actuel entre deux réseaux sont accessibles avec le procédé de l'invention, tout en n'utilisant qu'une seule valeur de PLMNid..

Le procédé utilise avantageusement un canal d'accès (par exemple utilisation du comportement d'une interface de type S8 conforme à un standard de radiocommunications mobile LTE et définie par les spécifications techniques 3GPP TS 23.401 et 3GPP TS 29.274) entre la passerelle de distribution du réseau « VISITED » et les moyens de rattachement au réseau de paquets du réseau « HOME ».

En outre, le deuxième code d'identification d'utilisateur du réseau hôte comporte :
- un code d'identification d'une zone de service du réseau hôte ;
- un code d'identification d'une catégorie d'utilisateurs du réseau hôte ; et
- un troisième code d'identification d'utilisateur au sein de la zone de service du réseau hôte et de la catégorie d'utilisateurs du réseau hôte. Ainsi, l'authentification du terminal utilisateur du réseau hôte dans le réseau visité est réalisée au moyen d'au moins un des trois codes d'identifications du deuxième code d'identification d'utilisateur du réseau hôte.

Le procédé selon l'invention peut également présenter une ou plusieurs des caractéristiques ci-dessous, considérées individuellement ou selon toutes les combinaisons techniquement possibles :
- l'authentification du terminal utilisateur du réseau hôte est réalisée dans le réseau visité et comprend un décodage du deuxième code d'identification de l'utilisateur du réseau hôte dans la station de base visitée pour aiguiller une demande d'attachement dudit terminal utilisateur au réseau visité vers les moyens d'authentification et de contrôle visités communiquant avec la au moins une base de données ;
- l'authentification du terminal utilisateur du réseau hôte est réalisée au moyen des moyens d'authentification et de contrôle visités communiquant avec la au moins une base de données ;
- la base de données est une base de données centralisée communiquant avec le réseau hôte et le réseau visité ;
- une base de données hôte appartient au réseau hôte et une base de données visitée appartient au réseau visité, la base de données hôte communiquant avec la base de données visitée pour authentifier le terminal utilisateur du réseau hôte ;
- ledit canal d'accès est une interface S8 conforme à un comportement décrit dans un standard de radiocommunications mobile LTE ;
- le réseau visité est conforme à un standard de radiocommunications mobile LTE,
   - lesdits moyens de rattachement visités étant formés par une entité PDN-GW « Packet Data Network Gateway »,
   - lesdits moyens d'authentification et de contrôle visités étant formés par une entité MME « Mobility Management Entity »,
   - ladite passerelle de distribution visitée étant formée par une entité S-GW « Serving Gateway »,
   - ladite au moins une station de base visitée étant formée par une entité eNodeB « evolved NodeB »,
   - ladite base de données visitée étant formée par un serveur HSS « Home Subscriber Server » ;
- ledit procédé comporte une étape d'allocation d'un canal de données passant par le canal d'accès dès lors que le terminal utilisateur du réseau hôte et rattaché au réseau visité demande une communication ;
- le code identificateur réseau commun au réseau hôte et au réseau visité est conforme à une syntaxe de type PLMNid ;
- la technologie dudit réseau hôte diffère de la technologie dudit réseau visité.

L'invention porte en outre sur un système de radiocommunications comportant au moins un réseau de radiocommunications de type hôte et un réseau de radiocommunications de type visité, le réseau hôte comportant au moins un terminal utilisateur et des moyens de rattachement hôtes à un réseau de paquets, et ledit réseau visité comportant :
- au moins une station de base visitée apte à assurer la transmission et la réception radio avec des terminaux utilisateurs se trouvant dans au moins une cellule visitée rattachée à ladite station de base visitée;
- des moyens d'authentification et de contrôle visités des terminaux utilisateurs aptes à authentifier les terminaux utilisateurs attachés au dit réseau; et
- au moins une passerelle de distribution visitée assurant la réception et l'émission radio avec ladite au moins une station de base visitée ;
ledit système étant caractérisé en ce qu'il est apte à mettre en oeuvre le procédé selon l'invention.

L'invention porte en outre sur un programme d'ordinateur comportant une ou plusieurs séquences d'instructions exécutables par une unité de traitement d'information, l'exécution desdites séquences d'instructions permettant une mise en oeuvre du procédé selon l'invention.

D'autres caractéristiques et avantages du procédé selon l'invention ressortiront clairement de la description qui en est donnée ci-après, à titre indicatif et nullement limitatif, en référence aux figures annexées ci-jointes, parmi lesquelles :
- la figure 1 représente un réseau de radiocommunications de type hôte et un réseau de radiocommunications de type visité permettant d'illustrer un procédé selon l'invention ;
- la figure 2 illustre le passage d'un terminal utilisateur d'un réseau de radiocommunications de type hôte à un réseau de radiocommunications de type visité ; et
- la figure 3 illustre les étapes d'un procédé d'attachement et d'authentification d'un terminal utilisateur auprès d'un réseau visité conforme à l'invention.

Pour des raisons de clarté, seuls les éléments essentiels pour la compréhension de l'invention ont été représentés, et ceci sans respect de l'échelle et de manière schématique.

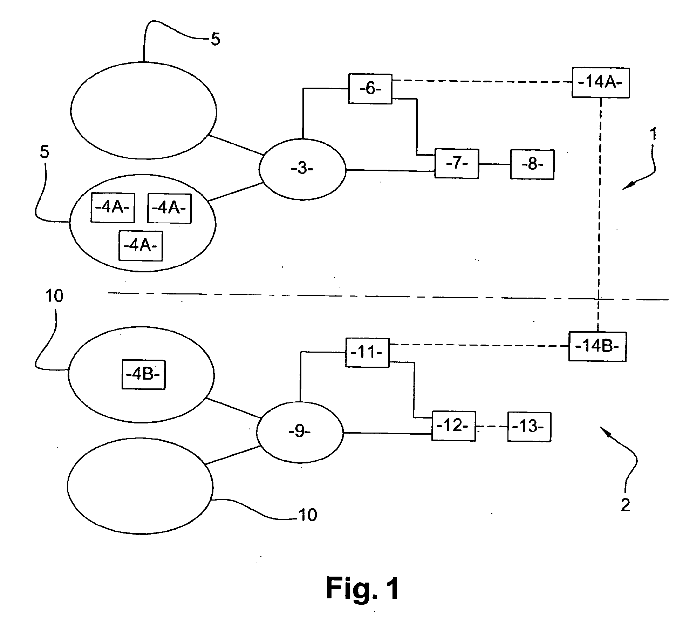

La figure 1 représente un réseau de radiocommunications de type hôte 1 (« HOME » en anglais) (dénommé réseau hôte 1 pour la suite de la description) et un réseau de radiocommunications de type visité 2 («VISITED » en anglais) (dénommé réseau visité 2 pour la suite de la description). A titre purement illustratif, les moyens décrits dans ce mode de réalisation font référence à la terminologie utilisée dans une technologie de type LTE. Il est entendu que l'infrastructure de ces réseaux n'est aucunement limitée à un tel standard de radiocommunications et peut s'appliquer à tout type de standard de radiocommunications à large bande en mode paquets, par exemple la technologie WIMAX.

Le réseau hôte 1 comporte notamment une station de base hôte 3 apte à assurer la transmission et la réception radio avec des terminaux utilisateurs 4A se trouvant dans une des cellules hôtes 5 rattachées à la station de base hôte 3 ; la station de base hôte 3 est par exemple une entité eNodeB en technologie LTE.

Il convient de noter que chaque terminal utilisateur 4A possède son propre code d'identification (ou identifiant) utilisateur, appelé premier code d'identification d'utilisateur et comprenant un code identificateur réseau commun pour une pluralité de réseaux 1, 2. Ce code identificateur réseau commun pour une pluralité de réseaux 1, 2 peut être formé par un identifiant de type PLMNid.

Le code identificateur réseau commun pour une pluralité de réseaux contenu dans le code d'identification utilisateur permet au terminal utilisateur 4A de se rattacher à son réseau hôte ou à un autre réseau de type visité ayant le même code identificateur réseau. Cet effet avantageux sera décrit ultérieurement plus en détails.

En outre, le premier code d'identification utilisateur comporte un deuxième code d'identification d'utilisateur du réseau hôte. Ce dernier peut comporter :
- un code d'identification d'une zone de service hôte (RNiD pour "Regional Network id" en anglais) pouvant désigner un département français comme par exemple le département des Yvelines,
- un code d'identification d'une catégorie d'utilisateurs hôte (ORGiD pour "ORGanisation id" en anglais) pouvant désigner la police, et
- un troisième code d'identification d'utilisateur au sein de la zone de service hôte et de la catégorie d'utilisateurs hôte, par exemple un numéro d'instance pour la police des Yvelines.

L'association du code d'identification d'une zone de service hôte, du code d'identification d'une catégorie d'utilisateurs hôte et du troisième code d'identification d'utilisateur au sein de la zone de service hôte et de la catégorie d'utilisateurs hôte peut être formée par un identifiant de type MSIN. Ainsi, le premier code d'identification utilisateur est une association du code identificateur réseau commun pour une pluralité de réseaux 1, 2 de type PLMNid et du deuxième code d'identification d'utilisateur du réseau hôte de type MSIN et forme un code de type IMSI.

Par ailleurs, le deuxième code d'identification d'utilisateur du réseau hôte peut être implémenté :
- sous forme de trois codes propre dont un dédié à la zone de service, un deuxième dédié à la catégorie de service et un troisième dédié à l'utilisateur, ou
- sous forme de plages de numérotation, par exemple une première plage de 0 à 1000 est dédiée aux pompiers des Yvelines et une deuxième plage de 1001 à 2000 est dédiée aux policiers des Yvelines, ou
- en combinant un code propre et une plage de numérotation.

Le réseau hôte 1 comporte en outre :
- des moyens d'authentification et de contrôle hôte 6 aptes à authentifier des terminaux utilisateurs, situés dans une des cellules hôtes 5 rattachées à la station de base hôte 3; les moyens d'authentification et de contrôle hôtes 6 sont par exemple une entité MME « Mobility Management Entity » en technologie LTE ;
- une passerelle de distribution hôte 7 assurant la réception et l'émission radio avec la station de base hôte 3; la passerelle de distribution hôte 7 est par exemple une entité S-GW « Serving Gateway » en technologie LTE ;
- des moyens de rattachement hôtes 8 à un réseau de paquets (typiquement un réseau IP) tels qu'une entité PDN-GW « Packet Data Network Gateway » en technologie LTE; l'entité PDN-GW forme un point d'ancrage vers le réseau IP («Internet Protocol» en anglais) ; on notera qu'il est possible d'avoir plusieurs PDN-GW selon le type de données à transmettre ;
- une base de données hôte 14A comportant des informations relatives au droit d'accès de terminaux utilisateurs 4A au réseau hôte 1 ; la base de données hôte 14A est par exemple un serveur HSS (« Home Subscriber Server »).

Le réseau visité 2 comporte :
- une station de base visitée 9 apte à assurer la transmission et la réception radio avec des terminaux utilisateur 4B situés dans une des cellules visitées 10 rattachées à la station de base visitée 9 ; la station de base visitée 9 est par exemple une entité eNodeB en technologie LTE ; le premier code d'identification d'utilisateur de chaque terminal utilisateur 4B du réseau visité comportant le code identificateur réseau commun à une pluralité de réseaux et un deuxième code d'identificateur d'utilisateur spécifique au réseau visité;
- des moyens d'authentification et de contrôle visités 11 aptes à authentifier des terminaux utilisateur situés dans une des cellules visitées 10; les moyens d'authentification et de contrôle visités 11 sont par exemple une entité MME « Mobility Management Entity » en technologie LTE ;
- une passerelle de distribution visitée 12 assurant la réception et l'émission radio avec la station de base visitée 9; la passerelle de distribution visitée 12 est par exemple une entité S-GW « Serving Gateway » en technologie LTE ;
- des moyens de rattachement visités 13 à un réseau de paquets (typiquement un réseau IP) tels qu'une entité PDN-GW « Packet Data Network Gateway » en technologie LTE ;
- une base de données visitée 14B comportant des informations relatives au droit d'accès de terminaux utilisateurs au réseau visité 2 ; la base de données visitée 14B est par exemple un serveur HSS « Home Subscriber Server ».

Le réseau hôte 1 et le réseau visité 2 possèdent le même code d'identification réseau qui est le code identificateur réseau commun. Le système de radiocommunications de l'invention peut comporter plus de deux réseaux de radiocommunication identifiés par un même code identificateur de réseau commun pour une pluralité de réseaux.

Dans une réalisation non limitative de l'invention, les moyens d'authentification et de contrôle hôtes MME 6 et les moyens d'authentification et de contrôle visités MME 10 sont responsables de l'authentification et du contrôle respectivement des terminaux utilisateurs 4A et 4B à partir des informations recueillies dans les bases de données hôte HSS 14A et visitée HSS 14B.

De façon générale, lors d'une demande de communication par un terminal utilisateur 4A appartenant au réseau hôte 1 situé dans une des cellules hôtes 5, les moyens d'authentification et de contrôle hôtes MME 6 s'assurent au moyen du premier code d'identification utilisateur que possède le terminal utilisateur 4A que ce dernier possède les droits d'accès à ce réseau hôte 1. Dans l'affirmative, le terminal utilisateur 4A accède alors aux services du réseau hôte 1. Pour ce faire, les moyens d'authentification et de contrôle hôtes MME 6 sélectionnent les moyens de rattachement hôtes PDN-GW 8 en vue d'établir un canal d'accès 15A entre la passerelle de distribution hôte 7 et les moyens de rattachement hôtes PDN-GW 8. Ce canal d'accès 15A dédié au terminal utilisateur 4A est par exemple formé par une interface de type S8. Une fois que le premier code d'identification utilisateur est reconnu par le réseau hôte 1, le réseau hôte 1 fournit un code d'identification temporaire permettant d'identifier l'utilisateur du terminal utilisateur 4A lors d'un rattachement ultérieur au réseau hôte 1. Puis, lors d'une demande de communication par ce terminal utilisateur 4A appartenant au réseau hôte 1 situé dans la cellule hôte 5, une étape d'allocation au terminal utilisateur 4A d'un canal de données 16A passant par le canal d'accès 15A est réalisée.

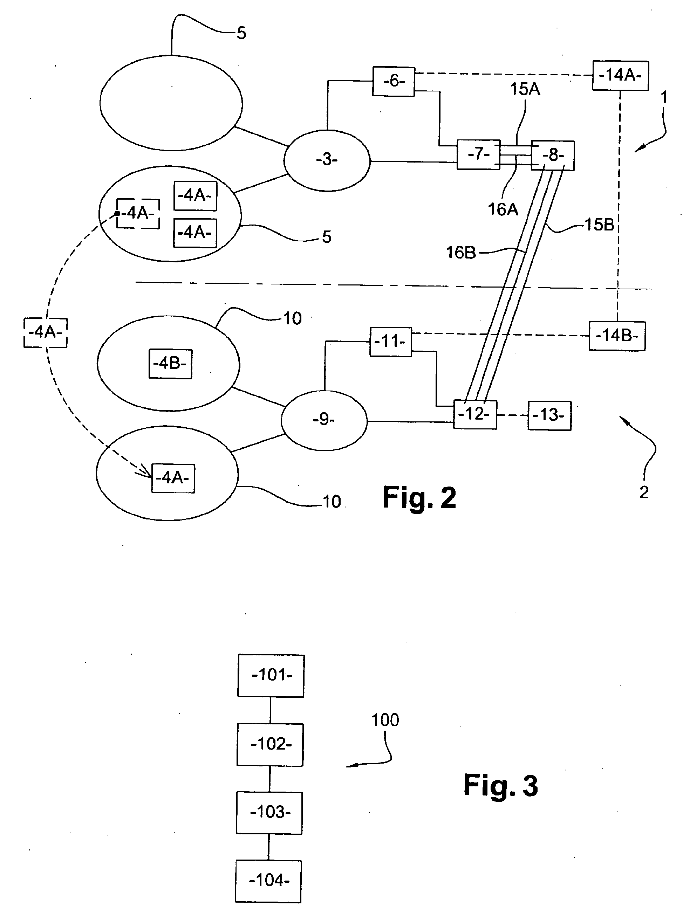

Comme illustré sur la figure 2, lorsque ce terminal utilisateur 4A passe de la cellule hôte 5 vers une des cellules visitées 10 :
- soit le terminal utilisateur 4A détecte qu'il change de réseau (il passe du réseau hôte 1 au réseau visité 2) au moyen d'informations systèmes fournies par la cellule visitée 10 au terminal utilisateur 4A situé dans la cellule visitée 10. Dans ce cas, le terminal utilisateur 4A se détache du réseau hôte 1 pour s'attacher au réseau visité 2 en fournissant à ce dernier son premier code d'identification utilisateur ;
- soit le terminal utilisateur 4A n'est pas apte à détecter un changement de réseau, auquel cas, il utilise son identifiant temporaire obtenu auprès du réseau hôte 1 pour s'attacher au réseau visité 2. Comme cet identifiant temporaire obtenu auprès du réseau hôte 1 n'est pas géré par le réseau visité 2, la cellule visitée 10 refuse l'identifiant temporaire et force le terminal utilisateur 4A à fournir son premier code d'identification utilisateur, par exemple de type IMSI.

Lors d'un tel changement de réseau, le procédé 100 (illustré en figure 3) selon l'invention comporte une première étape 101 d'accès au réseau visité 2 grâce au code identificateur réseau commun pour une pluralité de réseaux 1, 2 que possède le terminal utilisateur 4A. Cette étape 101 est possible uniquement si le code identificateur réseau commun pour une pluralité de réseaux 1, 2 du terminal utilisateur 4A est identique au code identificateur réseau du réseau visité 2.

Si tel est le cas, une seconde étape d'authentification 102 de l'utilisateur du terminal utilisateur 4A est réalisée. Durant cette deuxième étape d'authentification 102, les moyens d'authentification et de contrôle visités MME 11 s'assurent, au moyen du premier code d'identification de l'utilisateur 4A (IMSI) que ce dernier possède, les droits d'accès à ce réseau visité 2. Pour ce faire, les moyens d'authentification et de contrôle visités MME 11 envoie de manière connue à la base de données visitée 14B le premier code d'identification de l'utilisateur du terminal utilisateur 4A. La base de données 14B va décoder le deuxième code d'identification de l'utilisateur du terminal utilisateur 4A afin de retrouver l'identité du réseau hôte 1 et de la base de données hôte 14A qui gère les utilisateurs et les droits dans le réseau hôte 1. Une communication est établie entre les bases de données hôte 14A et visitée 14B, qui vont identifier les droits de l'utilisateur du terminal utilisateur 4A via son deuxième code d'identification utilisateur au sein du réseau hôte 1 (MSIN) selon une méthode de décodage propre et commune aux réseaux hôte 1 et visité 2..

Si l'utilisateur du terminal utilisateur 4A possède des droits d'accès au réseau visité 2, une troisième étape d'établissement d'un canal d'accès 103 est réalisée. Dans cette troisième étape 103, les moyens d'authentification et de contrôle visités MME 11 sélectionnent les moyens de rattachement hôtes PDN-GW 8 afin d'établir, entre la passerelle de distribution visitée 12 et les moyens de rattachement hôtes PDN-GW 8, un canal d'accès 15B (formé par une interface de type S8 conforme à la technologie LTE) dédié au terminal 4A.

En outre, un identifiant d'utilisateur temporaire d'accès au réseau visité 2 est fourni à l'utilisateur du terminal utilisateur 4A lors de l'étape 103. Ainsi, à chaque demande de communication dans le réseau visité 2, l'utilisateur du terminal utilisateur 4A sera authentifié grâce à son identifiant temporaire d'accès au réseau visité 2 et est routé directement vers les moyens de rattachement à un réseau de paquets de son réseau hôte 1. Cette mise en oeuvre est identique à un standard d'établissement de canal de données à partir d'un identifiant d'utilisateur temporaire (plus connu sous l'acronyme T-IMSI, en technologie LTE).

Puis, lors d'une demande de communication par ce terminal utilisateur 4A appartenant au réseau hôte 1 situé dans la cellule visitée 10, une quatrième étape d'allocation 104 au terminal utilisateur 4A d'un canal de données 16B passant par le canal d'accès 15B est réalisée. La procédure d'établissement des canaux de données est conforme au standard 3GPP.

Comme indiqué précédemment, le code d'identification d'une zone de service hôte peut désigner un département français comme par exemple le département des Yvelines, tandis que le code d'identification d'une catégorie d'utilisateurs hôte peut désigner la police. Dans cet exemple, le réseau hôte de l'utilisateur est formé par le réseau de la police des Yvelines.

Dans ce contexte, si un utilisateur ayant son réseau hôte appartenant à la police du département des Yvelines est situé dans une cellule du réseau de la police du département des Hauts-de-Seine alors un canal d'accès sera établi entre la passerelle de distribution du réseau de la police des Hauts-de-Seine et les moyens de rattachement au réseau de paquet du réseau de la police des Yvelines. Dans une telle mise en oeuvre, l'itinérance (ou roaming) est uniquement géographique. Il convient de noter que les droits de l'utilisateur et la facturation sont liés aux accords de roaming existant entre le réseau hôte et le réseau visité.

Selon une autre mise en oeuvre non illustrée du procédé de l'invention, un utilisateur du réseau de la police des Yvelines peut souhaiter utiliser le réseau des pompiers des Yvelines. Dans ce cas, un canal d'accès sera établi entre la passerelle de distribution du réseau des pompiers et les moyens de rattachement au réseau de paquet du réseau de la police de la même zone géographique, à savoir les Yvelines. Dans une telle mise en oeuvre, l'itinérance est uniquement organisationnelle. Il convient de noter que les droits de l'utilisateur et la facturation sont liés aux accords de roaming existant entre le réseau hôte et le réseau visité.

Il est entendu que le procédé d'itinérance peut être à la fois organisationnel et géographique. A titre d'exemple, un policier des Yvelines peut souhaiter utiliser le réseau des pompiers des Hauts-de-Seine. Dans ce cas, un canal d'accès sera établi entre la passerelle de distribution du réseau des pompiers des Hauts-de-Seine et les moyens de rattachement au réseau de paquet du réseau de la police des Yvelines.

En outre, le procédé de l'invention a été plus particulièrement décrit avec une base de données hôte HSS 14A et une base de données visitée HSS 14B communiquant d'une part, entre elles et d'autre part, avec les moyens d'authentification et de contrôle hôtes MME 6 ainsi que les moyens d'authentification et de contrôle visités MME 10. Il est entendu que dans le cadre de l'invention, une unique base de données centralisée pouvant être formée par la base de données 14A ou 14B peut être utilisée. Dans ce cas, la base de données centralisée comporte des informations relatives aux droits d'accès de terminaux utilisateurs 4A et 4B d'une part au réseau hôte 1, et d'autre part au réseau visité 2. Cette base de données centralisée communique en outre avec les moyens d'authentification et de contrôle hôtes MME 6 et les moyens d'authentification et de contrôle visités MME 10.

Selon une mise en oeuvre non illustrée du procédé de l'invention, le décodage du deuxième code d'identification de l'utilisateur au sein du réseau hôte (MSIN) peut s'effectuer :
- soit au niveau de la station de base visitée 9 afin d'aiguiller la demande d'attachement au réseau visité vers des moyens d'authentification et de contrôle MME visités spécifiques dans le réseau visité 2 aux terminaux utilisateurs visiteurs ;
- soit au niveau des moyens d'authentification et de contrôle MME visités en choisissant une base de données visitée HSS 14B apte à réaliser le décodage du deuxième code d'identification de l'utilisateur du réseau hôte (MSIN).

Il convient de noter que la technologie du réseau hôte 1 peut être différente de celle du réseau visité 2.

Ainsi, le réseau hôte 1 peut être conforme à une technologie de type LTE, Wimax ou 3G tandis que le réseau visité 2 peut être conforme à une technologie de type LTE, Wlmax ou 2G. Lorsque le réseau hôte est conforme à une technologie de type Wlmax, la base de donnée est formée par une entité AAA (pour « Authentification, Authorization and Accounting » en anglais).

L'invention décrite concerne également un procédé et un système de radiocommunications pour attacher et authentifier un terminal utilisateur auprès d'un réseau visité. Selon une implémentation, les étapes du procédé de l'invention sont déterminées par les instructions d'un programme d'ordinateur incorporé dans une entité du système de radiocommunications. Le programme apte à être mis en oeuvre dans le système de radiocommunications de l'invention comporte des instructions de programme qui, lorsque ledit programme est exécuté dans une entité du système de radiocommunications dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention. Le programme peut être téléchargé dans la station de base via un réseau de communication, comme internet.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

L'invention trouve une application dans tous les types de réseaux de radiocommunications et trouve une application particulièrement intéressante dans le cas des réseaux professionnels de radiocommunications de type PMR.

## Revendications

1. Procédé (100) d'attachement et d'authentification d'un terminal utilisateur (4A) d'un réseau de radiocommunications de type hôte (1) à un réseau de radiocommunications de type visité (2), ledit réseau hôte (1) comportant notamment des moyens de rattachement hôtes (8) à un réseau de paquets et ledit réseau visité (2) comportant :
- au moins une station de base visitée (9) apte à assurer la transmission et la réception radio avec des terminaux utilisateurs (4A, 4B) se trouvant dans au moins une cellule visitée (10) rattachée à ladite station de base visitée (9);
- des moyens d'authentification et de contrôle visités (11) des terminaux utilisateurs (4A, 4B) aptes à authentifier les terminaux utilisateurs (4A, 4B) attachés au dit réseau; et
- au moins une passerelle de distribution visitée (12) assurant la réception et l'émission radio avec ladite au moins une station de base visitée (9);
ledit procédé étant tel que le réseau hôte (1) et le réseau visité (2) possèdent un code d'identificateur réseau commun au moins au deux réseaux, chaque terminal utilisateur (4A) appartenant au réseau hôte (1) possède un premier code d'identification d'utilisateur comportant, d'une part, le code identificateur réseau commun au moins au réseau hôte (1) et au réseau visité (2); et d'autre part un deuxième code d'identification d'utilisateur du réseau hôte,
et lorsque le terminal utilisateur (4A) appartenant au réseau hôte (1) se trouve dans une cellule visitée (10) de la station de base visitée (9), ledit procédé (100) comporte les étapes suivantes :
- accéder (101) au réseau visité (2) depuis le terminal utilisateur du réseau hôte (1), au moyen du code identificateur réseau commun ;
- authentifier (102), dans le réseau visité (2) le terminal utilisateur au moyen du deuxième code d'identification d'utilisateur du réseau hôte auprès d'au moins une base de données (14A, 14B) comportant des informations relatives aux droits d'accès d'utilisateurs des terminaux utilisateurs (4A, 4B) au réseau visité (2) ; et
- établir (103) un canal d'accès (15) dédié au terminal utilisateur du réseau hôte (1) entre la passerelle de distribution visitée (12) et les moyens de rattachement hôtes (8)
ledit procédé étant **caractérisé en ce que** ledit deuxième code d'identification d'utilisateur du réseau hôte comporte :
- un code d'identification d'une zone de service du réseau hôte ;
- un code d'identification d'une catégorie d'utilisateurs du réseau hôte ; et
- un troisième code d'identification d'utilisateur au sein de la zone de service du réseau hôte et de la catégorie d'utilisateurs du réseau hôte,
l'authentification du terminal utilisateur du réseau hôte (1) dans le réseau visité (2) étant réalisée au moyen d'au moins un des trois codes d'identifications du deuxième code d'identification d'utilisateur du réseau hôte (1).

2. Procédé (100) selon la revendication 1 **caractérisé en ce que** l'authentification (102) du terminal utilisateur du réseau hôte (4A) est réalisée dans le réseau visité (2) et comprend un décodage du deuxième code d'identification de l'utilisateur du réseau hôte (1) dans la station de base visitée (9) pour aiguiller une demande d'attachement dudit terminal utilisateur (4A) au réseau visité (2) vers les moyens d'authentification et de contrôle visités (11) communiquant avec la au moins une base de données (14A, 14B).

3. Procédé selon la revendication 1 **caractérisé en ce que** l'authentification (102) du terminal utilisateur du réseau hôte (4A) est réalisée au moyen des moyens d'authentification et de contrôle visités (11) communiquant avec la au moins une base de données (14A, 14B).

4. Procédé selon l'une des revendications 1 à 3 **caractérisé en ce que** la base de données (14A, 14B) est une base de données centralisée communiquant avec le réseau hôte (1) et le réseau visité (2).

5. Procédé selon l'une des revendications 1 à 3 **caractérisé en ce qu'**une base de données hôte (14A) appartient au réseau hôte (1) et une base de données visitée (14B) appartient au réseau visité (2), la base de données hôte (14A) communiquant avec la base de données visitée (14B) pour authentifier (102) le terminal utilisateur (4A) du réseau hôte (1).

6. Procédé selon l'une des revendications précédentes **caractérisé en ce que** ledit canal d'accès (15) est une interface S8 conforme à un comportement décrit dans un standard de radiocommunications mobile LTE.

7. Procédé selon l'une des revendications 1 à 5 et la revendication 6 **caractérisé en ce que** le réseau visité (2) est conforme à un standard de radiocommunications mobile LTE,
- lesdits moyens de rattachement visités (13) étant formés par une entité PDN-GW « Packet Data Network Gateway »,
- lesdits moyens d'authentification et de contrôle visités (11) étant formés par une entité MME « Mobility Management Entity »,
- ladite passerelle de distribution visitée (12) étant formée par une entité S-GW « Serving Gateway »,
- ladite au moins une station de base visitée (9) étant formée par une entité eNodeB « evolved NodeB »,
- ladite base de données visitée (14A, 14B) étant formée par un serveur HSS « Home Subscriber Server ».

8. Procédé selon l'une des revendications précédentes **caractérisé en ce qu'**il comporte une étape d'allocation (104) d'un canal de données (16) passant par le canal d'accès (15) dès lors que le terminal utilisateur (4A) du réseau hôte (1) et rattaché au réseau visité (2) demande une communication.

9. Procédé selon l'une des revendications précédentes **caractérisé en ce que** le code identificateur réseau commun au réseau hôte (1) et au réseau visité (2) est conforme à une syntaxe de type PLMNid.

10. Procédé selon l'une des revendications précédentes **caractérisé en ce que** la technologie dudit réseau hôte (1) diffère de la technologie dudit réseau visité (2).

11. Système de radiocommunications comportant au moins un réseau de radiocommunications de type hôte (1) et un réseau de radiocommunications de type visité (2), le réseau hôte (1) comportant au moins un terminal utilisateur (4A) et des moyens de rattachement hôtes (8) à un réseau de paquets, et ledit réseau visité (2) comportant :
- au moins une station de base visitée (9) apte à assurer la transmission et la réception radio avec des terminaux utilisateurs (4A, 4B) se trouvant dans au moins une cellule visitée (10) rattachée à ladite station de base visitée (9);
- des moyens d'authentification et de contrôle visités (11) des terminaux utilisateurs (4A, 4B) aptes à authentifier les terminaux utilisateurs (4A, 4B) attachés au dit réseau; et
- au moins une passerelle de distribution visitée (12) assurant la réception et l'émission radio avec ladite au moins une station de base visitée (9);
ledit système étant **caractérisé en ce qu'**il est apte à mettre en oeuvre le procédé selon l'une au moins des revendications précédentes.

12. Programme d'ordinateur comportant une ou plusieurs séquences d'instructions exécutables par une unité de traitement d'information, ledit programme d*ordinateur étant **caractérisé en ce que** l'exécution desdites séquences d'instructions permet une mise en oeuvre du procédé selon l'une quelconque des revendications précédentes 1 à 10, lorsqu'il est chargé sur un ordinateur.

## Patentansprüche

1. Anbindungs- und Authentifizierungsverfahren (100) eines Nutzerterminals (4A) eines Funkkommunikationsnetzes vom Typ Host (1) an ein Funkkommunikationsnetz vom besuchten Typ (2), wobei das genannte Host-Netz (1) insbesondere Host-Anbindungsmittel (8) an ein Paketnetz umfasst und das genannte besuchte Netz (2) umfasst:
- wenigstens eine besuchte Basisstation (9), die geeignet ist, die Funkübertragung und den Funkempfang mit Nutzerterminals (4A, 4B) zu gewährleisten, die sich in wenigstens einer besuchten Zelle (10) befinden, die an die genannte besuchte Basisstation (9) angebunden ist;
- besuchte Authentifizierungs- und Kontrollmittel (11) der Nutzerterminals (4A, 4B), die geeignet sind, die an das genannte Netz angebundenen Nutzerterminals (4A, 4B) zu authentifizieren; und
- wenigstens eine besuchte Verteiler-Gateway (12), die den Funkempfang und die Funksendung mit der genannten wenigstens einen besuchten Basisstation (9) gewährleistet;
wobei das genannte Verfahren derart ist, dass das Host-Netz (1) und das besuchte Netz (2) einen Netzwerkidentifizierungscode, der wenigstens den zwei Netzwerken gemeinsam ist, besitzen, wobei jedes Nutzerterminal (4A), das zum Host-Netz (1) gehört, einen ersten Nutzeridentifizierungscode besitzt, der einerseits den Netzidentifizierungscode, der wenigstens dem Host-Netz (1) und dem besuchten Netz (2) gemeinsam ist; und andererseits einen zweiten Nutzeridentifizierungscode des Host-Netzes besitzt;
und wenn das Nutzerterminal (4A), das zum Host-Netz (1) gehört, sich in einer besuchten Zelle (10) der besuchten Basisstation (9) befindet, umfasst das genannte Verfahren (100) die folgenden Schritte:
- Zugreifen (101) auf das besuchte Netz (2) ab dem Nutzerterminal des Host-Netzes (1) mittels des gemeinsamen Netzidentifizierungscodes;
- Authentifizieren (102) des Nutzerterminals in dem besuchten Netz (2) mittels des zweiten Nutzeridentifierungscodes des Host-Netzes bei wenigstens einer Datenbank (4A, 4B), die Informationen bezüglich der Nutzerzugriffsrechte der Nutzerterminals (4A, 4B) auf das besuchte Netz (2) umfassen; und
- Herstellen (103) eines für das Nutzerterminal des Host-Netzes (1) dedizierten Zugriffskanals (15) zwischen der besuchten Verteiler-Gateway (12) und den Host-Anbindungsmitteln (8)
wobei das genannte Verfahren **dadurch gekennzeichnet ist, dass** der zweite Nutzeridentifizierungscode des Host-Netzes umfasst:
- einen Identifizierungscode eines Servicebereichs des Host-Netzes;
- einen Identifizierungscode einer Nutzerkategorie des Host-Netzes; und
- einen dritten Nutzeridentifizierungscode innerhalb des Servicebereichs des Host-Netzes und der Nutzerkategorie des Host-Netzes;
wobei die Authentifizierung des Nutzerterminals des Host-Netzes (1) im besuchten Netz (2) mittels wenigstens einer der drei Identifizierungscodes des zweiten Nutzeridentifizierungscodes des Host-Netzes (1) realisiert ist.

2. Verfahren (100) gemäß Anspruch 1, **dadurch gekennzeichnet, dass** die Authentifizierung (102) des Nutzerterminals des Host-Netzes (4A) in dem besuchten Netz (2) realisiert ist und eine Dekodierung des zweiten Nutzeridentifizierungscodes des Host-Netzes (1) in der besuchten Basisstation (9) umfasst, um eine Anbindungsanfrage des genannten Nutzerterminals (4A) an das besuchte Netz (2) zu den Authentifizierungs- und Kontrollmitteln (11) umfasst, die mit der wenigstens einen Datenbank (14A, 14B) kommunizieren.

3. Verfahren gemäß Anspruch 1, **dadurch gekennzeichnet, dass** die Authentifizierung (102) des Nutzerterminals des Host-Netzes (4A) mittels besuchter Authentifizierungs- und Kontrollmittel (11) realisiert ist, die mit der wenigstens einen Datenbank (14A, 14B) kommunizieren.

4. Verfahren gemäß einem der Ansprüche 1 bis 3, **dadurch gekennzeichnet, dass** die Datenbank (14A, 14B) eine zentralisierte Datenbank ist, die mit dem Host-Netz (1) und dem besuchten Netz (2) kommuniziert.

5. Verfahren gemäß einem der Ansprüche 1 bis 3, **dadurch gekennzeichnet, dass** eine Host-Datenbank (14A) zu dem Host-Netz (1) gehört und eine besuchte Datenbank (14B) zu dem besuchten Netz (2) gehört, wobei die Hoste-Datenbank (14A) mit der besuchten Datenbank (14B) kommuniziert, um das Nutzerterminal (4A) des Hostnetzes (1) zu authentifizieren (102).

6. Verfahren gemäß einem der voranstehenden Ansprüche, **dadurch gekennzeichnet, dass** der genannte Zugangskanal (15) eine Schnittstelle S8 ist, die mit einem Verhalten konform ist, welches in einer Norm für mobile Funkkommunikation LTE beschrieben ist.

7. Verfahren gemäß einem der Ansprüche 1 bis 5 und dem Anspruch 6, **dadurch gekennzeichnet, dass** das besuchte Netz (2) mit einer Norm für mobile Funkkommunikation LTE konform ist,
- wobei die genannten besuchten Anbindungsmittel (13) durch eine Einheit PDN-GW "Packet Data Network Gateway" gebildet sind,
- wobei die genannten besuchten Authentifizierungs- und Kontrollmittel (11) durch eine Einheit MME "Mobility Management Entity" gebildet sind,
- wobei die genannte besuchte Verteiler-Gateway (12) durch eine Einheit S-GW "Serving Gateway" gebildet ist,
- wobei die wenigstens eine besuchte Basisstation (9) durch eine Einheit eNodeB "evolved NodeB" gebildet ist,
- wobei die besuchte Datenbank (14A, 14B) durch einen Server HSS "Home Subscriber Server" gebildet ist.

8. Verfahren gemäß einem der voranstehenden Ansprüche, **dadurch gekennzeichnet, dass** es einen Zuordnungsschritt (104) eines Datenkanals (16) umfasst, der durch den Zugangskanal (15) durchtritt, sobald das an das besuchte Netz (2) angeschlossene Nutzerterminal (4A) des Host-Netzes (1) eine Kommunikation anfordert.

9. Verfahren gemäß einem der voranstehenden Ansprüche, **dadurch gekennzeichnet, dass** der Netzidentifizierungscode, der dem Host-Netz (1) und dem besuchten Netz (2) gemeinsam ist, einer Syntax vom Typ PLMNid gemeinsam ist.

10. Verfahren gemäß einem der voranstehenden Ansprüche, **dadurch gekennzeichnet, dass** die Technologie des genannten Host-Netzes (1) von der Technologie des genannten besuchten Netzes (2) abweicht.

11. Funkkommunikationssystem, umfassend wenigstens ein Funkkommunikationsnetz vom Typ Host (1) und ein Funkkommunikationsnetz vom besuchten Typ (2), wobei das Host-Netz (1) wenigstens ein Nutzerterminal (4A) und Host-Anbindungsmittel (8) an ein Paketnetz umfasst und das genannte besuchte Netz (2) umfasst:
- wenigstens eine besuchte Basisstation (9), die geeignet ist, die Funkübertragung und den Funkempfang mit den Nutzerterminals (4A, 4B) zu gewährleisten, die sich in wenigstens einer an die genannte besuchte Basisstation (9) angebundenen besuchten Zelle (10) befindet;
- besuchte Authentifizierungs- und Kontrollmittel (11) der Nutzerterminals (4A, 4B), die geeignet sind, die an das genannte Netz angebundenen Nutzerterminals (4A, 4B) zu authentifizieren; und
- wenigstens eine besuchte Verteiler-Gateway (12), die den Funkempfang und die Funksendung mit der genannten wenigstens einen besuchten Basisstation (9) gewährleistet;
wobei das genannte System **dadurch gekennzeichnet ist, dass** es geeignet ist, das Verfahren gemäß wenigstens einem der voranstehenden Ansprüche umzusetzen.

12. Computerprogramm, umfassend eine oder mehrere Anweisungssequenzen, die durch eine Informationsverarbeitungseinheit ausführbar sind, wobei das genannte Computerprogramm **dadurch gekennzeichnet ist, dass** die Ausführung der genannten Anweisungssequenzen eine Umsetzung des Verfahrens gemäß irgendeinem der voranstehenden Ansprüche 1 bis 10 erlaubt, wenn es auf einen Computer geladen ist.

## Claims

1. Method (100) of attaching and authenticating a user terminal (4A) of a radio communications network of host type (1) to a telecommunications network of visited type (2), said host network (1) comprising in particular host means for attaching (8) to a packet network and said visited network (2) comprising:
- at least one visited base station (9) able to ensure the radio transmission and reception with user terminals (4A, 4B) lying in at least one visited cell (10) attached to said visited base station (9);
- visited means for authenticating and checking (11) the user terminals (4A, 4B) able to authenticate the user terminals (4A, 4B) attached to said network; and
- at least one visited distribution gateway (12) ensuring the radio reception and transmission with said at least one visited base station (9);
said method being such that the host network (1) and the visited network (2) have a network identifier code that is common at least with the two networks, with each user terminal (4A) belonging to the host network (1) has a first user identifier code comprising, on the one hand, the network identifier code that is common at least to the host network (1) and to the visited network (2); and on the other hand a second user identification code of the host network,
and when the user terminal (4A) belonging to the host network (1) is lying in a visited cell (10) of the visited base station (9), said method (100) comprises the following steps:
- accessing (101) the visited network (2) from the user terminal of the host network (1), by means of the common network identifier code;
- authenticating (102), in the visited network (2) the user terminal by means of the second user identification code of the host network with at least one database (14A, 14B) comprising information relating to the access rights of users of the user terminals (4A, 4B) to the visited network (2); and
- establishing (103) an access channel (15) dedicated to the user terminal of the host network (1) between the visited distribution gateway (12) and the host means for attaching (8)
said method being **characterised in that** said second user identification code of the host network comprises:
- an identification code of a service zone of the host network;
- an identification code of a category of users of the host network; and
- a third user identification code within the service zone of the host network and of the category of users of the host network,
with the authentication of the user terminal of the host network (1) in the visited network (2) being carried out by means of at least one of the three identification codes of the second user identification code of the host network (1).

2. Method (100) according to claim 1 **characterised in that** the authentication (102) of the user terminal of the host network (4A) is carried out in the visited network (2) and comprises a decoding of the second identification code of the user of the host network (1) in the visited base station (9) in order to direct a request for attaching of said user terminal (4A) to the visited network (2) to the visited means for authenticating and checking (11) communicating with the at least one database (14A, 14B).

3. Method according to claim 1 **characterised in that** the authentication (102) of the user terminal of the host network (4A) by means of visited means for authenticating and checking (11) communicating with the at least one database (14A, 14B).

4. Method according to one of claims 1 to 3 **characterised in that** the database (14A, 14B) is a centralised database communicating with the host network (1) and the visited network (2).

5. Method according to one of claims 1 to 3 **characterised in that** a host database (14A) belongs to the host network (1) and a visited database (14B) belongs to the visited network (2), with the host database (14A) communicating with the visited database (14B) in order to authenticate (102) the user terminal (4A) of the host network (1).

6. Method according to one of the preceding claims **characterised in that** said access channel (15) is an interface S8 in accordance with the behaviour described in an LTE mobile radio communications standard.

7. Method according to one of claims 1 to 5 and claim 6 **characterised in that** the visited network (2) is compliant with an LTE mobile radio communications standard,
- said visited means for attaching (13) being formed by a PDN-GW "Packet Data Network Gateway" entity ,
- visited means for authenticating and checking (11) being formed by an MME "Mobility Management Entity,
- said visited distribution gateway (12) being formed by an S-GW "Serving Gateway" entity,
- said at least one visited base station (9) being formed by an eNodeB "evolved NodeB" entity,
- said visited database (14A, 14B) being formed by an HSS "Home Subscriber Server".

8. Method according to one of the preceding claims **characterised in that** it comprises a step of allocating (104) a data channel (16) passing through the access channel (15) when the user terminal (4A) of the host network (1) and attached to the visited network (2) requests communication.

9. Method according to one of the preceding claims **characterised in that** the network identifier code that is common with the host network (1) and with the visited network (2) is compliant with a syntax of the PLMNid type.

10. Method according to one of the preceding claims **characterised in that** the technology of said host network (1) differs from the technology of said visited network (2).

11. Radio communications system comprising at least one radio communications network of the host type (1) and a radio communications network of the visited type (2), the host network (1) comprising at least one user terminal (4A) and host means for attaching (8) to a packet network, and said visited network (2) comprising:
- at least one visited base station (9) able to ensure the radio transmission and reception with user terminals (4A, 4B) lying in at least one visited cell (10) attached to said visited base station (9);
- visited means for authenticating and checking (11) the user terminals (4A, 4B) able to authenticate the user terminals (4A, 4B) attached to said network; and
- at least one visited distribution gateway (12) ensuring the radio reception and transmission with said at least one visited base station (9);
said system being **characterised in that** it is able to implement the method according to at least one of the preceding claims.

12. Computer program comprising one or several sequences of instructions that can be executed by a data processing unit, said computer program being **characterised in that** the execution of said sequences of instructions allow for an implementation as claimed in any preceding claim 1 to 10, when it is loaded on a computer.
